(19) Europäisches Patentamt / European Patent Office / Office européen des brevets

(11) **EP 2 505 252 B1**

(12) **EUROPEAN PATENT SPECIFICATION**

(45) Date of publication and mention
of the grant of the patent:
**21.05.2014 Bulletin 2014/21**

(21) Application number: **12160981.2**

(22) Date of filing: **23.03.2012**

(51) Int Cl.:
*B01D 46/24* (2006.01)  *B01J 37/02* (2006.01)
*B01J 21/06* (2006.01)  *B01J 23/22* (2006.01)
*B01J 23/30* (2006.01)  *B01J 23/40* (2006.01)
*B01J 23/50* (2006.01)  *B01J 23/63* (2006.01)
*B01D 53/94* (2006.01)  *B01J 29/06* (2006.01)
*B01J 35/02* (2006.01)  *B01J 35/04* (2006.01)
*B01J 37/00* (2006.01)  *C04B 111/00* (2006.01)
*C04B 38/00* (2006.01)

(54) **Honeycomb structure and honeycomb catalyst body**

Wabenstruktur und wabenförmiger katalytischer Körper

Structure en nid d'abeille et corps catalytique en nid d'abeille

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2011 JP 2011075149
21.02.2012 JP 2012035348**

(43) Date of publication of application:
**03.10.2012 Bulletin 2012/40**

(73) Proprietor: **NGK Insulators, Ltd.
Nagoya-shi, Aichi 467-8530 (JP)**

(72) Inventor: **Hirose, Shogo
Nagoya-shi, Aichi 467-8530 (JP)**

(74) Representative: **Paget, Hugh Charles Edward et al
Mewburn Ellis LLP
33 Gutter Lane
London
EC2V 8AS (GB)**

(56) References cited:
**EP-A1- 1 408 207      US-A- 4 404 007
US-A1- 2005 279 693**

**Description**

Background of the Invention and Related Art Statement

The present invention relates to a honeycomb structure and a honeycomb catalyst body. More specifically, the present invention relates to a honeycomb structure usable as a honeycomb catalyst carrier capable of carrying a larger amount of a catalyst than a conventional honeycomb catalyst body and having a small pressure loss, and to a honeycomb catalyst body.

There has conventionally been used a honeycomb catalyst body where a catalyst is loaded on a honeycomb structure in order to purify exhaust gas discharged from various engines and the like. Such a honeycomb catalyst body purifies harmful substances such as carbon monoxide (CO), hydrocarbon (HC), and nitrogen oxide ($NO_x$) contained in exhaust gas by a catalyst when a fluid (exhaust gas) is sent into the cells from the inlet end face.

A honeycomb structure used for such a honeycomb catalyst body is manufactured as described below in order to improve the exhaust gas purification performance of the honeycomb catalyst body. That is, it is manufactured so as to have a large geometric area where a catalyst is loaded (see, e.g., JP-A-2003-33664 and JP-A-2001-269585). When the geometric area where a catalyst is loaded is increased, contact efficiency between exhaust gas and the catalyst is enhanced. Therefore, the exhaust gas purification performance of the honeycomb catalyst body is improved.

Recently, the exhaust gas regulations have been strengthened. Therefore, remarkable increase in the amount of a catalyst loaded on the honeycomb catalyst body is expected. As the honeycomb catalyst body, there are a three way catalyst (TWC), a $NO_x$ storage-reduction catalyst (NSR), a diesel oxidation catalyst (DOC), and a $NO_x$ selective reduction catalyst (SCR), and the like, for gasoline. Therefore, there is desired the development of a honeycomb structure capable of carrying a large amount of catalyst in comparison with a conventional honeycomb catalyst body and having a pressure loss hardly increased even by loading a large amount of catalyst (i.e., having a low pressure loss).

However, in the carriers (honeycomb structures) of the honeycomb catalyst bodies described in JP-A-2003-33664 and JP-A-2001-269585, it is difficult to allow the catalyst to enter the pores formed in the partition walls. Therefore, it is difficult to increase the amount of the catalyst to be loaded. Even if the amount of the catalyst to be loaded can be increased, pores are sometimes clogged with the catalyst. Therefore, there arises a problem of increasing the pressure loss.

The documents EP 1 408 207 A1 and US 4 404 007 A describe honeycomb structures having slits or communication holes in adjacent honeycomb cells.

**Summary of the Invention**

The present invention has been made in view of the prior art problems and aims to provide a honeycomb structure usable as a honeycomb catalyst carrier capable of carrying a larger amount of a catalyst than a conventional honeycomb catalyst body and having a small pressure loss and a honeycomb catalyst body.

According to the present invention, there are provided the honeycomb structure and honeycomb catalyst body described below.

A honeycomb structure comprising porous partition walls separating and forming a plurality of cells functioning as fluid passages, wherein the partition walls have a plurality of communicating holes for communicating adjacent cells with one another, characterized in that an aperture diameter of each of the communicating holes in a cross section perpendicular to the cell extension direction is smaller than the length of the longest straight line among the straight lines parallel to the surfaces of the partition walls and drawn in the communicating hole in the cross section, and a distance between side walls forming the communicating hole becomes shorter from the longest straight line toward the aperture with the longest straight line as a border line in the communicating hole in the cross section.

The honeycomb structure according to [1], wherein the total number of the communicating holes in a cross section perpendicular to the cell extension direction is 1 to 40.

The honeycomb structure according to [1] or [2], wherein the communicating holes satisfy the formula: $0 <$ (the aperture diameter / length of the longest straight line) $< (\sqrt{3}) / 2$, and the thickness t of the partition walls and the length of the longest straight line in a cross section perpendicular to the cell extension direction satisfy the formula: $1 <$ (length of the longest straight line / thickness t) $< 2$.

The honeycomb structure according to any one of [1] to [3], wherein the partition walls have a porosity of 40 to 70%.

The honeycomb catalyst body provided with a honeycomb structure according to any one of [1] to [4] and a catalyst loaded on inner surfaces of the pores of the partition walls, surfaces of the partition walls, and inner surfaces of the communicating holes of the partition walls.

The honeycomb catalyst body according to [5], wherein the catalyst contains at least one kind selected from the group consisting of platinum, rhodium, palladium, metal-substituted zeolite, vanadium, titania, tungsten oxide, silver, alumina, ceria, and zirconia.

A honeycomb structure of the present invention is provided with porous partition walls separating and forming a plurality of cells functioning as fluid passages, and the partition walls have a plurality of communicating holes for communicating adjacent cells with one another. The communicating holes satisfy the following conditions. That is, an aperture diameter of the communicating hole in a cross section perpendicular to the cell extension direction is smaller than the length of the longest straight line among the straight lines parallel to the surfaces of the partition walls and drawn in the communicating hole in the cross section. Furthermore, a distance between side walls forming the communicating hole becomes shorter from the longest straight line toward the aperture with the longest straight line as a border line in the communicating hole in the cross section. Therefore, upon loading a catalyst on a honeycomb structure of the present invention, the catalyst enters the communicating holes in a good manner and is loaded on surfaces of the communicating holes. Therefore, there can be obtained a honeycomb catalyst body where a larger amount of a catalyst is loaded than a conventional honeycomb catalyst body. In addition, in the partition walls of a honeycomb structure of the present invention, "a plurality of communicating holes are formed". Therefore, even by loading a larger amount of a catalyst than a conventional honeycomb catalyst body, fluid passages are secured by the plural communicating holes. As a result, the increase of the pressure loss in the honeycomb catalyst body can be inhibited. That is, a honeycomb catalyst body having a small pressure loss can be obtained.

A honeycomb catalyst body of the present invention is "provided with a honeycomb structure of the present invention and a catalyst loaded on inner surfaces of the pores of the partition walls, surfaces of the partition walls, and inner surfaces of the communicating holes of the partition walls." Therefore, a honeycomb catalyst body of the present invention carries a larger amount of a catalyst than a conventional honeycomb catalyst body and has a small pressure loss.

**Brief Description of the Drawings**

[Fig. 1] Fig. 1 is a perspective view schematically showing one embodiment of a honeycomb structure of the present invention.

[Fig. 2] Fig. 2 is a cross-sectional view schematically showing a cross section perpendicular to the cell extension direction of the honeycomb structure shown in Fig. 1.

[Fig. 3] Fig. 3 is a cross-sectional view schematically showing an enlarged part of a partition wall of the honeycomb structure shown in Fig. 2.

[Fig. 4] Fig. 4 is a cross-sectional view schematically showing another enlarged part of a partition wall of the honeycomb structure shown in Fig. 2.

**Reference Numerals**

2: one end face, 3: the other end face, 4: cell, 5: partition wall, 7: outer peripheral wall, 10: communicating hole, 12: longest straight line, 14: aperture, 21: sidewall, 100: honeycomb structure

**Detailed Description of the Invention**

Hereinbelow, an embodiment of the present invention will be described. The present invention is not limited to the following embodiment, and an embodiment where a change, an improvement, or the like is suitably added to the following embodiment on the basis of ordinary knowledge of a person of ordinary skill in the art within the range of not deviating from the gist of the present invention is included in the scope of the present invention.

[1] Honeycomb structure:

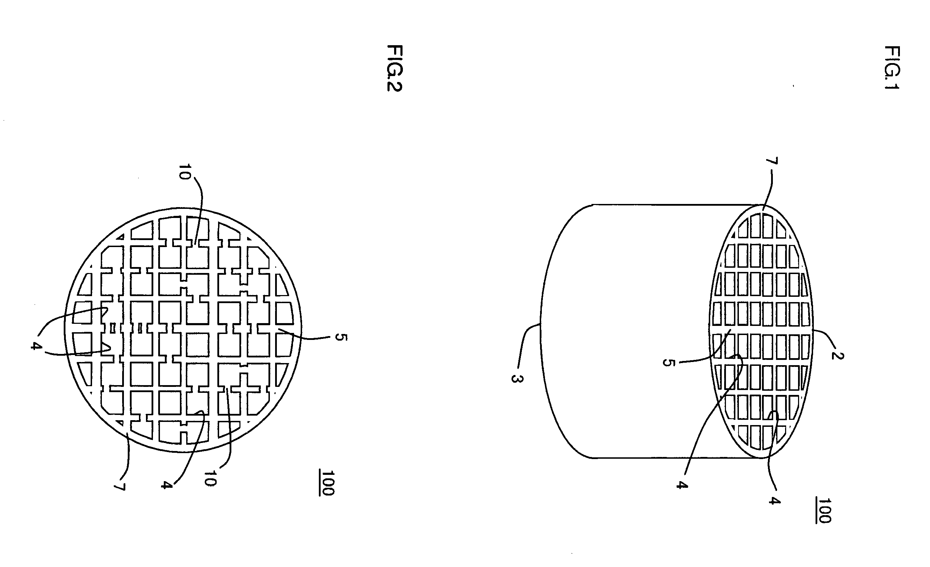

As the honeycomb structure 100 shown in Figs. 1 and 2, an embodiment of a honeycomb structure of the present invention is provided with porous partition walls 5 separating and forming a plurality of cells 4 functioning as fluid passages. In the honeycomb structure 100, the partition walls 5 have a plurality of communicating holes 10 for communicating adjacent cells 4 with one another. In each of the communicating holes 10, an aperture diameter X of the communicating holes 10 in a cross section perpendicular to the cell 4 extension direction is smaller than the length of the longest straight line 12 (Hereinbelow sometimes referred to as the "maximum diameter Y") among the straight lines parallel to the surfaces of the partition walls 5 and drawn in the communicating hole 10 in the cross section. Further, in the aforementioned cross section, a distance between the "side walls 21, 21 forming the communicating hole 10" becomes shorter from the longest straight line 12 toward the aperture with the longest straight line 12 as a border line in the communicating hole 10.

Such a honeycomb structure 100 is provided with porous partition walls 5 separating and forming a plurality of cells 4 functioning as fluid passages. The partition walls 5 have a plurality of communicating holes 10 for communicating adjacent cells 4 with one another. Further, the communicating holes 10 satisfy the following conditions. That is, an aperture diameter X of the communicating hole 10 in a cross section perpendicular to the cell extension direction is smaller than the length of the longest straight line 12 (the maximum diameter Y) among the straight lines parallel to the surfaces of the partition walls 5 and drawn in the communicating hole 10 in the cross section. Furthermore, a distance between the "side walls 21, 21 forming the communicating hole 10" becomes shorter from the longest straight line 12 toward the aperture with the longest straight line 12 as the border line in the communicating hole 10 in the cross section. Therefore, upon loading a catalyst on the honeycomb structure 100, a so-called anchor effect is caused. Therefore, the catalyst enters the aforementioned communicating holes 10 in a good manner and is loaded on the surfaces of the communicating holes 10. Therefore, there can be obtained a honeycomb catalyst body where a larger amount of a catalyst is loaded than a conventional honeycomb catalyst body. In addition, in the partition walls 5 of a honeycomb structure 100 of the present invention, "a plurality of communicating holes 10 are formed". Therefore, even by loading a larger amount of a catalyst than a conventional honeycomb catalyst body, fluid passages are secured by the plural communicating holes 10. As a result, the increase of the pressure loss in the honeycomb catalyst body can be inhibited. That is, a honeycomb catalyst body having a small pressure loss can be obtained. Fig. 1 is a perspective view schematically showing one embodiment of a honeycomb structure of the present invention. Fig. 2 is a cross-sectional view schematically showing a cross section perpendicular to the cell extension direction of the honeycomb structure shown in Fig. 1.

[1-1] Partition wall:

The partition walls 5 have a thickness of preferably 0.060 to 0.288 mm, more preferably 0.108 to 0.240 mm, particularly preferably 0.132 to 0.192 mm. Such a range of the thickness of the partition walls 5 enables to inhibit increase in pressure loss. The thickness of the partition walls 5 is measured with observing a cross section parallel to the central axis by an electron microscope.

The partition walls 5 have a porosity of preferably 40 to 70%, more preferably 45 to 65%, particularly preferably 50 to 60%. Such a range of the porosity of the partition walls 5 enables to inhibit increase in pressure loss with appropriately maintaining strength of the honeycomb structure. The porosity of the partition walls 5 is measured by a mercury porosimeter.

The honeycomb structure 100 has a cell density of preferably 15 to 140 cells/cm$^2$, more preferably 31 to 116 cells/cm$^2$, particularly preferably 46 to 93 cells/cm$^2$. When the cell density is in the aforementioned range, increase in pressure loss can be inhibited in a good manner. The cell density is the number of cells per unit area in a cross section perpendicular to the cell extension direction.

It is preferable that the partition walls 5 contain ceramic as the main component. The material for the partition walls 5 is preferably at least one kind selected from the group consisting of silicon carbide, silicon-silicon carbide based composite material, cordierite, mullite, alumina, spinel, silicon carbide-cordierite based composite material, lithium aluminum silicate, and aluminum titanate. Of these, cordierite is preferable. This is because a honeycomb structure obtained has a small thermal expansion coefficient and excellent thermal shock resistance. Incidentally, "contain ceramic as the main component" means that ceramic is contained at 50 mass% or more of the entire components.

[1-1-1] Communicating hole:

The communicating holes 10 are formed so as to communicate adjacent cells 4 with one another. Further, the communicating holes 10 are holes where an aperture diameter X of each of the communicating holes 10 in a cross section perpendicular to the cell 4 extension direction is smaller than the "length of the longest straight line (line segment) 12" among the "straight lines (line segments) parallel to the surfaces of the partition walls 5 and drawn in the communicating hole 10". By forming such communicating holes 10, upon loading a catalyst, a so-called anchor effect is caused. Therefore, upon loading a catalyst on the honeycomb structure (i.e., when catalyst slurry is applied on the honeycomb structure), the catalyst easily enters the communicating holes 10. As a result, a larger amount of a catalyst can be loaded than the amount of a catalyst loaded on a conventional honeycomb catalyst body. Incidentally, the amount of a catalyst loaded on a conventional honeycomb catalyst body is 100 to 200 g/L. On the other hand, the use of a honeycomb structure of the present invention enables to obtain a honeycomb catalyst body having a catalyst-loading amount of 200 to 300 g/L. According to a honeycomb structure of the present invention, even with the above catalyst-loading amount, a pressure loss does not increase, and a pressure loss at the same level as that of a conventional honeycomb catalyst body can be maintained. Incidentally, the "aperture diameter of the communicating hole" means diameters of both the apertures on one cell side and the other cell side of adjacent cells communicated with each other by the communicating hole. That is, that the "aperture diameter is smaller than the length of the "longest straight line" (the maximum diameter Y)" means that both the aperture diameter on one cell side of adjacent cells and the aperture diameter on the other cell side are smaller than the maximum diameter Y. The "straight lines parallel to the surfaces of the partition walls 5 and drawn in the communicating hole 10" means the straight lines (line segments) perpendicular to the thickness direction of each partition wall 5 where each communication hole 10 is formed and drawn in the communication hole 10.

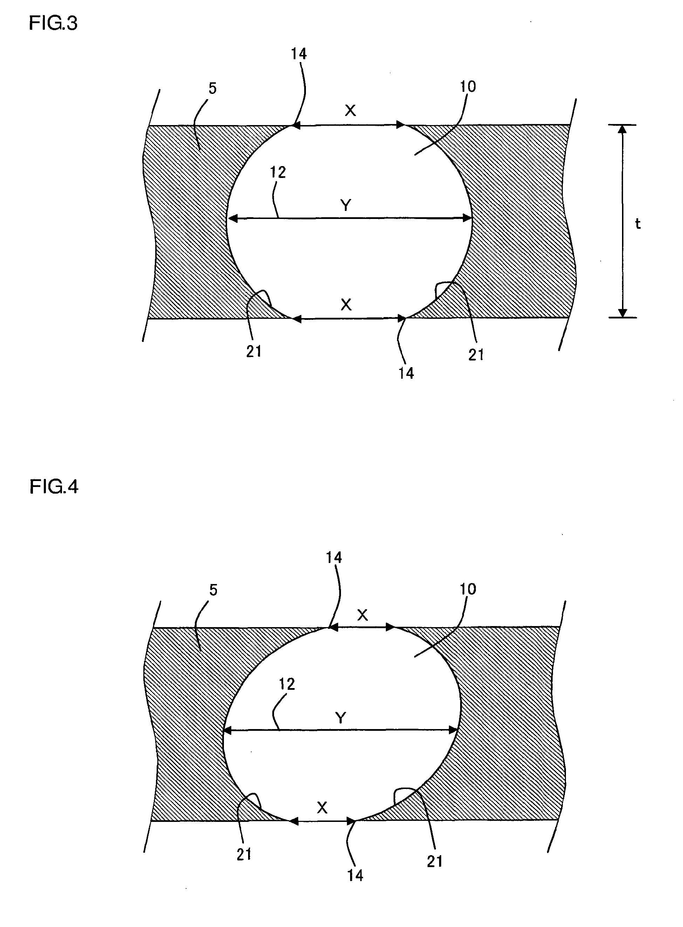

As shown in Figs. 3 and 4, the communicating holes 10 are holes where a distance between the "side walls 21, 21 forming the communicating hole 10" becomes shorter from the "longest straight line" 12 toward the aperture 14 with the "longest straight line" 12 as the border line in the cross section perpendicular to the cell 4 extension direction. That is, among the "straight lines parallel to a surface of the partition wall 5" and drawn in the communicating hole 10 in a cross section perpendicular to the cell 4 extension direction, the "straight lines (line segments) each drawn by connecting a point on one side wall 21 with a point on the other side wall 21" are defined as "line segments in a communicating hole". The communicating holes 10 are holes where the length of the line segments in a communicating hole becomes shorter toward the aperture 14 from the "longest straight line" 12 as the border line. The phase "toward the aperture 14" means "toward each of the aperture 14 on one side and the aperture 14 on the other side". By forming such communicating holes 10, upon applying catalyst slurry on the honeycomb structure, the catalyst enters the communicating holes 10 in a good manner by a so-called anchor effect. Therefore, a large amount of the catalyst can be loaded on the honeycomb structure 100. The distance between the side walls 21 and 21 may become shorter continuously or in a stepwise fashion. The case that "the distance between the side walls 21 and 21 becomes shorter continuously" is, for example, a case that the communicating hole 10 is a hollow having a nearly spherical shape. Each of Figs. 3 and 4 shows a communicating hole 10 where the distance between the side walls 21 and 21 becomes shorter continuously. Fig. 3 is a cross-sectional view schematically showing an enlarged part of a partition wall of the honeycomb structure shown in Fig. 2. Fig. 4 is a cross-sectional view schematically showing another enlarged part of a partition wall of the honeycomb structure shown in Fig. 2.

The total number of the communicating holes 10 in a cross section perpendicular to the cell extension direction is 1 to 40. Such a range of the total number of the communicating holes 10 enables to obtain a honeycomb structure having a small pressure loss and good strength (A axis compression strength).

It is preferable that the honeycomb structure 100 satisfies the following conditions. That is, the communicating holes 10 satisfy the formula: $0 < ($ the aperture diameter $X$ / the maximum diameter $Y) < (\sqrt{3})$ /2. Further, the thickness t of the partition walls 5 and the maximum diameter $Y$ in a cross section perpendicular to the cell 4 extension direction satisfy the formula: $1 < ($ the maximum diameter $Y$ / thickness $t) < 2$. By satisfying both the aforementioned formulae, a honeycomb structure having a smaller pressure loss can be obtained.

The cells 4 extend from one end face 2 to the other end face 3 of the honeycomb structure 100 to function as fluid passages. In the cells 4 of the honeycomb structure 100 shown in Fig. 1, the aperture portions have a quadrangular outer peripheral rim shape on the inflow end face (end face 2 on one side). That is, the cells 4 have a quadrangular shape of a cross section perpendicular to the cell extension direction. Incidentally, there is no particular limitation on the shape of the outer peripheral rim of each of the aperture portions on the inflow end face, and the shape may be, for example, a polygon such as a triangle, a quadrangle, and a hexagon, a circle, and an ellipse. There is no particular limitation on the shape of the outer peripheral rim of each of the aperture portions on the outflow end face, and the shape may be the same as or different from that of the aperture portions on the inflow end face. There may be employed, for example, a polygon such as a triangle, a quadrangle, and an octagon, a circle, and an ellipse.

The honeycomb structure 100 shown in Fig. 1 has an outer peripheral wall 7 disposed in the outer periphery. Though there is no particular limitation on the thickness of the outer peripheral wall 7, it is preferably 0.2 to 4.0 mm. Such a range of the thickness of the outer peripheral wall 7 enables to inhibit increase in the pressure loss with appropriately maintaining the strength of the honeycomb structure.

Though it is preferable that the material for the outer peripheral wall 7 is the same as that for the partition walls 5, it may be different.

There is no particular limitation on the shape of the honeycomb structure 100. Preferred are a circular cylindrical shape, a cylindrical shape having an elliptic bottom face, a polygonal cylindrical shape having a bottom shape of a quadrangle, a pentagon, a hexagon, or the like; etc. A cylindrical shape is further preferable. Though there is no particular limitation on the size of the honeycomb structure 100, the length in the cell extension direction is preferably 50 to 300 mm. For example, in the case that the external shape of the honeycomb structure 100 is a circular cylindrical shape, the diameter of the bottom face is preferably 110 to 350 mm.

The length L of the honeycomb structure in the central axis direction is usually 50 to 300 mm.

[2] Method for manufacturing honeycomb structure:

A honeycomb structure of the present invention can be manufactured as described below for example. The method has a kneaded material preparation step where a forming raw material containing a ceramic raw material and a pore former is kneaded to obtain kneaded material, a forming step where a honeycomb formed body having a plurality of cells is obtained by extruding kneaded material, and a firing step where the honeycomb formed body is fired to obtain a honeycomb structure having partition walls. In this method, there is used a pore former having an average particle diameter larger than the thickness of the partition wall in a cross section perpendicular to the cell extension direction.

In such a method for manufacturing a honeycomb structure, there is used a pore former having an average particle diameter larger than the thickness of the partition wall in a cross section perpendicular to the cell extension direction. Therefore, there can be manufactured a honeycomb structure provided with partition walls where "a plurality of communicating holes communicating adjacent cells with one another are formed" and where "an aperture diameter of each of the communicating holes in a cross section perpendicular to the cell extension direction is smaller than the length of the longest straight line among the straight lines parallel to the surfaces of the partition walls and drawn in the communicating hole in the cross section". That is, there can be manufactured a honeycomb structure usable as a honeycomb catalyst carrier capable of carrying a larger amount of a catalyst than a conventional honeycomb catalyst body and having a small pressure loss.

Hereinbelow, a method for manufacturing a honeycomb structure of the present invention will specifically be described.

[2-1] Kneaded material manufacturing step:

In this step, a forming raw material containing a ceramic raw material and a pore former is mixed and kneaded to obtain a kneaded material. In this step, as the pore former, there is used a pore former having an average particle diameter larger than the thickness of the partition wall in a cross section perpendicular to the cell extension direction. The use of such a pore former enables to form a plurality of communicating holes described above in the partition walls of the resultant honeycomb structure.

Examples of the pore former include starch, a resin balloon, water-absorbing resin, and silica gel.

There is no particular limitation on the average particle diameter of the pore former as long as it is larger than the thickness of the partition walls in a cross section perpendicular to the cell extension direction. Specifically, it is preferably 50 to 200 $\mu$ m.

It is preferable to use also a pore former having a conventionally known average particle diameter together. This is because porous partition walls are formed, i.e., because a large number of pores are formed. The average particle diameter of a pore former having a conventionally known average particle diameter is usually 1 to 30 $\mu$m.

The pore former content in the forming raw material is preferably 1 to 8 parts by mass with respect to 100 parts by mass of the ceramic raw material. The pore former content within the aforementioned range enables to manufacture a honeycomb structure enables to carry a large amount of a catalyst. Further, there can be obtained a honeycomb catalyst body having a low pressure loss even with carrying a large amount of a catalyst.

The ceramic raw material is preferably at least one kind selected from a group consisting of silicon carbide, silicon-silicon carbide based composite material, cordierite forming raw material, mullite, alumina, spinel, silicon carbide-cordierite based composite material, lithium aluminum silicate, and aluminum titanate. Of these, cordierite forming raw material is preferable. This is because cordierite forming raw material enables to obtain a honeycomb structure having a small thermal expansion coefficient and excellent thermal shock resistance.

The forming raw material may contain a dispersion medium, an additive, and the like besides the ceramic raw material and the pore former.

As the dispersion medium, water or the like can employed. As the additive, an organic binder, a surfactant, or the like can be employed. The dispersion medium content is preferably 30 to 150 parts by mass with respect to 100 parts by mass of the ceramic raw material.

As the organic binder, there can be employed methyl cellulose, hydroxypropoxyl cellulose, hydroxyethyl cellulose, carboxymethyl cellulose, polyvinyl alcohol, or the like. Of these, it is preferable to use methyl cellulose and hydroxypropoxyl cellulose together. The organic binder content is preferably 1 to 10 parts by mass with respect to 100 parts by mass of the ceramic raw material.

As the surfactant, there can be employed ethylene glycol, dextrin, fatty acid soap, polyalcohol, or the like. They may be used alone, or two or more kinds may be used in combination. The surfactant content is preferably 0.1 to 5.0 parts by mass with respect to 100 parts by mass of the ceramic raw material.

There is no particular limitation on the method for forming the kneaded material by kneading the forming raw material, and, for example, a method where a kneader, a vacuum kneader, or the like is used can be employed.

[2-2] Forming step:

In this step, the kneaded material obtained in the kneaded material preparation step is extruded to obtain a honeycomb formed body having a plurality of cells passing through from one end face to the other end face. The extrusion can be performed by the use of a die having a desired cell shape, partition wall thickness, and cell density. The material for the die is preferably superhard alloy, which hardly abrade away.

[2-3] Firing step:

In this step, the honeycomb formed body obtained above is fired to obtain a honeycomb structure having porous partition walls separating and forming a plurality of cells functioning as fluid passages.

The firing temperature can suitably be determined according to the material for the honeycomb formed body. For example, in the case that the material of the honeycomb formed body is cordierite, the firing temperature is preferably 1380 to 1450°C, more preferably 1400 to 1440°C. In addition, the firing time is preferably about 3 to 10 hours.

The honeycomb formed body may be dried before firing. There is no particular limitation on the drying method. For example, hot air drying, microwave drying, dielectric drying, reduced pressure drying, vacuum drying, or freeze drying may be employed. Of these, it is preferable to employ dielectric drying, microwave drying, or hot air drying alone or in combination. As the drying conditions, drying temperature of 30 to 150°C and drying time of 1 minute to 2 hours are preferably employed.

[3] Honeycomb catalyst body:

A honeycomb catalyst body of the present invention is provided with a honeycomb structure of the present invention and a catalyst loaded on the inner surfaces of the pores of the partition walls, the surfaces of the partition walls, and the inner surfaces of the communicating holes of the partition walls. Since such a honeycomb catalyst body is provided with a honeycomb structure of the present invention and the aforementioned catalyst, a larger amount of the catalyst is loaded than a conventional honeycomb catalyst body, and the pressure loss is almost the same as in a conventional honeycomb catalyst body or smaller than that of a conventional honeycomb catalyst body. Therefore, even when exhaust gas regulations become strict, it can be used as a honeycomb catalyst body in a good manner.

A honeycomb catalyst body of the present invention allows exhaust gas to enter the predetermined cells from the inlet end face (end face on one side) and then allows the exhaust gas entered the predetermined cells to pass through the partition walls. At this time, harmful substances in the exhaust gas can be purified by a catalyst. The "exhaust gas" means gas discharged from engines of automobiles or construction machinery, industrial stationary engines, burning appliances, and the like. The "harmful substances" mean carbon monoxide (CO), hydrocarbon (HC), nitrogen oxide ($NO_x$), and the like. The permeated fluid (purified gas) thus passed through the partition wall is discharged from the aperture portions on the outflow end faces (end faces on the other side) of the cells (remaining cells) adjacent to the predetermined cells. The exhaust gas flows into the plural communicating holes formed in the partition walls, passes through the communicating holes, and flows into the remaining communicating holes. Thus, exhaust gas flows also into the plural communicating holes. That is, exhaust gas flow passage is secured by the plural communicating holes. Therefore, the increase in pressure loss in the honeycomb catalyst body can be inhibited.

[3-1] Catalyst:

The catalyst can suitably be determined according to the purpose. Examples of the catalyst include three way catalyst, an oxidation catalyst, a $NO_x$ selective reduction catalyst, and a $NO_x$ storage-reduction catalyst. The amount of the catalyst to be loaded per unit volume is preferably 100 to 300 g/liter, more preferably 150 to 250 g/liter.

The three way catalyst means a catalyst purifying mainly hydrocarbon (HC), carbon monoxide (CO), and nitrogen oxide ($NO_x$). For example, a catalyst containing platinum (Pt), palladium (Pd), and rhodium (Rh) can be employed. By the three way catalyst, hydrocarbon is oxidized to give water and carbon dioxide. Carbon monoxide is oxidized to give carbon dioxide. Nitrogen oxide is reduced to give nitrogen. Thus, purification is performed by oxidation or reduction.

As the oxidation catalyst, a catalyst containing a noble metal can be employed. Specifically, a catalyst containing at least one kind selected from the group consisting of platinum (Pt), palladium (Pd), and Rhodium (Rh) is preferable.

As the $NO_x$ selective reduction catalyst, a catalyst containing at least one kind selected from the group consisting of metal-substituted zeolite, vanadium, titania, tungsten oxide, silver, alumina, ceria, and zirconia can be employed.

As the $NO_x$ storage-reduction catalyst, a catalyst containing alkali metal or alkali earth metal or both of them can be employed. Examples of the alkali metal include K, Na, and Li. An example of the alkali earth metal is Ca.

[4] Method for manufacturing honeycomb catalyst body:

A honeycomb catalyst body of the present invention can be manufactured as described below for example.

First, a honeycomb structure is manufactured as a catalyst carrier. The honeycomb structure can be manufactured according to the aforementioned method for manufacturing a honeycomb structure of the present invention.

Next, a catalyst is loaded on the inner surfaces of the pores of the partition walls, the surfaces of the partition walls, and the inner surfaces of the communicating holes in the partition walls. The honeycomb catalyst body can be manufactured in such a manner. There is no particular limitation on the method for loading a catalyst. The catalyst can be loaded according to a method used in a method for manufacturing a conventionally known honeycomb catalyst body. For example, the following method can be employed. In the first place, catalyst slurry containing a catalyst is prepared. Then, the catalyst slurry prepared above is sent into the cells by dipping or suction. It is preferable that the catalyst slurry is applied on the entire surfaces of the partition walls in the cells. After the catalyst slurry is sent into the cells, superfluous slurry is blown away by compression air. Then, the catalyst slurry is dried and baked. The baking conditions may be 450 to 700°C and 0.5 to 6 hours. Thus, a catalyst can be loaded on a honeycomb structure.

Examples

Hereinbelow, the present invention will specifically be described on the basis of Examples. However, the present invention is by no means limited to these Examples.

[Porosity (%)]:

The porosity (%) was measured by a mercury porosimeter (mercury porosimetry). As the mercury porosimeter, there was used Auto Pore III Model 9405 (Trade Name) produced by Micromeritics Instrument Corporation.

[Catalyst-loading amount (g/L)]:

The catalyst-loading amount (g/L) of the three way catalyst per volume (1L) of the honeycomb structure was calculated.

[Noble metal loading amount (g/L)]:

The loading amount (g/L) of the noble metals contained in the three way catalyst per volume (1L) of the honeycomb structure was calculated. Regarding the noble metals, the ratio of platinum (Pt) to rhodium (Rh) (Pt:Rh) was controlled to 5:1.

[Total number of communicating holes]:

The total number of the communicating holes in a cross section perpendicular to a cell extension direction was obtained by a scanning electron microscope (SEM). Specifically, a cross section perpendicular to a cell extension direction was taken by a SEM, and the total number of the communicating holes in the SEM photograph taken above was counted.

(Example 1)

[Manufacture of honeycomb structure (A)]

As the cordierite forming raw material, there were used alumina, aluminum hydroxide, kaolin, talc, and silica. To 100 parts by mass of the cordierite forming raw material were added 5 parts by mass of a pore former, 85 parts by mass of a dispersion medium, 8 parts by mass of an organic binder, and 3 parts by mass of a surfactant, and they were mixed and kneaded to prepare kneaded material. Water was used as the dispersion medium. As the pore former, coke having an average particle diameter of 20 to 50 $\mu$m was used. As the organic binder, hydroxypropylmethyl cellulose was used. As the dispersant, ethylene glycol was used.

Next, the kneaded material was extruded by the use of a predetermined die to obtain a honeycomb formed body having a quadrangular cell shape (cells having a quadrangular shape in a cross section perpendicular to the cell extension direction) and a circular columnar entire shape (circular cylindrical shape). The honeycomb formed body was dried by a microwave drier. Then, it was completely dried by a hot air drier. Next, both the end faces of the dried honeycomb formed body were cut off to have a predetermined size.

Then, the honeycomb formed body obtained above was fired at 1410 to 1440°C for five hours. Thus, a honeycomb structure was obtained.

Next, mixed particles (specific surface area of 50 $m^2$/g) of $\gamma$Al$_2$O$_3$ having an average particle diameter of 40 $\mu$m and CeO$_2$ having an average particle diameter of 1.5 $\mu$m were subjected to wet pulverization by the use of a ball mill. Thus, pulverized particles having pores and average particle diameter of 2.0 $\mu$m were obtained. The pulverized particles obtained above were immersed in a solution containing Pt and Rh to load Pt and Rh on the inner surfaces of the pores of the pulverized particles. Then, to the pulverized particles having Pt and Rh loaded thereon were added acetic acid and water to obtain slurry for coating a three way catalyst. The honeycomb structure manufactured was immersed in the slurry for coating a three way catalyst. Thus, the three way catalyst was coated on the surfaces of the partition walls of the honeycomb structure, the surfaces of the pores in the partition walls, and the inner surfaces of the communicating holes of the partition walls to form a three way catalyst layer. Then, the honeycomb structure was dried and then fired at 600°C for three hours to obtain a honeycomb catalyst body.

The honeycomb catalyst body obtained above had a diameter of 25 mm and a length of 50 mm in the central axis direction ("length" in Table 1). The partition wall thickness ("partition wall thickness t" in Table 1) was 114.3 $\mu$m. The partition walls had a porosity of 50%. The cell density was 62 cells/cm$^2$. The loading amount ("catalyst-loading amount" in Table 1) of the oxides ($\gamma Al_2O_3$ and $CeO_2$) of the honeycomb catalyst body was 260 g/L. The loading amount of noble metals per unit volume ("noble metal amount" in Table 1) of the honeycomb catalyst body was 3.00 g/L. The average pore size of the catalyst layer was 2.0 $\mu$m, which was the same as the average particle diameter of the pulverized particles. The results are shown in Table 1.

In the honeycomb catalyst body obtained above, the aperture diameter X was 277 $\mu$m, and the maximum diameter Y of the communicating holes was 300 $\mu$m. The ratio of "aperture diameter X / maximum diameter Y" ("X/Y" in Table 2) was 0.92. The ratio of "maximum diameter Y / thickness t" ("Y/t" in Table 2) was 2.6. The total number of the communicating holes ("communicating hole number" in Table 2) was 15. The results are shown in Table 2.

When a plurality of communicating holes are present in a cross section perpendicular to the cell extension direction, the "aperture diameter X" in the present Example means the average value of the aperture diameters of the plural communicating holes. When a plurality of communicating holes are present in a cross section perpendicular to the cell extension direction, the "maximum diameter Y" means the average value of the "maximum diameters Y" of the plural communicating holes.

[Table 1]

| | Diameter (mm) | Length (mm) | Partition wall thickness t ($\mu$m) | Porosity (%) | Cell density (cells / cm2) | Catalyst-loading amount (g/L) | Noble metal amount (mass%) |
|---|---|---|---|---|---|---|---|
| Example 1 | 25 | 50 | 114.3 | 50 | 62 | 260 | 3.00 |
| Example 2 | 25 | 50 | 114.3 | 65 | 62 | 260 | 3.00 |
| Example 3 | 25 | 50 | 114.3 | 35 | 62 | 260 | 3.00 |
| Example 4 | 25 | 50 | 114.3 | 75 | 62 | 260 | 3.00 |
| Example 5 | 25 | 50 | 114.3 | 50 | 62 | 260 | 3.00 |
| Example 6 | 25 | 50 | 114.3 | 50 | 62 | 260 | 3.00 |
| Example 7 | 25 | 50 | 114.3 | 50 | 62 | 260 | 3.00 |
| Example 8 | 25 | 50 | 114.3 | 50 | 62 | 260 | 3.00 |
| Example 9 | 25 | 50 | 203.2 | 65 | 62 | 260 | 3.00 |
| Example 10 | 25 | 50 | 114.3 | 65 | 62 | 260 | 3.00 |
| Example 11 | 25 | 50 | 114.3 | 65 | 62 | 260 | 3.00 |
| Example 12 | 25 | 50 | 114.3 | 65 | 62 | 260 | 3.00 |

(continued)

| | Diameter (mm) | Length (mm) | Partition wall thickness t ($\mu$m) | Porosity (%) | Cell density (cells / cm2) | Catalyst-loading amount (g/L) | Noble metal amount (mass%) |
|---|---|---|---|---|---|---|---|
| Example 13 | 25 | 50 | 114.3 | 65 | 62 | 260 | 3.00 |
| Example 14 | 25 | 50 | 114.3 | 65 | 62 | 260 | 3.00 |
| Comp. Ex. 1 | 25 | 50 | 114.3 | 35 | 62 | 260 | 3.00 |
| Comp. Ex. 2 | 25 | 50 | 114.3 | 50 | 62 | 260 | 3.00 |
| Comp. Ex. 3 | 25 | 50 | 114.3 | 50 | 62 | 260 | 3.00 |
| Example 15 | 25 | 50 | 114.3 | 50 | 62 | 260 | 3.00 |
| Example 16 | 25 | 50 | 114.3 | 50 | 62 | 260 | 3.00 |
| Example 17 | 25 | 50 | 114.3 | 75 | 62 | 260 | 3.00 |

[Table 2]

| | Aperture diameter X (μm) | Maximum diameter Y (μm) | X/Y | Y/t | communicating hole number (holes) | Pressure loss | | A axis compresive strength | | Purification performance | |
|---|---|---|---|---|---|---|---|---|---|---|---|
| | | | | | | Pressure loss ratio | Evaluation | A axis compressive strength (MPa) | Evaluation | NOx purification rate (%) | Evaluation |
| Example 1 | 277 | 300 | 0.92 | 2.6 | 15 | 0.93 | B | 1.10 | A | 61 | A |
| Example 2 | 62 | 130 | 0.48 | 1.1 | 42 | 0.85 | A | 0.61 | B | 60 | A |
| Example 3 | 97 | 150 | 0.65 | 1.3 | 10 | 0.95 | B | 5.00 | A | 63 | A |
| Example 4 | 97 | 150 | 0.65 | 1.3 | 38 | 0.75 | A | 0.50 | B | 61 | A |
| Example 5 | 97 | 150 | 0.65 | 1.3 | 20 | 0.80 | A | 1.10 | A | 60 | A |
| Example 6 | 50 | 150 | 0.33 | 1.3 | 10 | 0.80 | A | 1.05 | A | 62 | A |
| Example 7 | 66 | 150 | 0.44 | 1.3 | 36 | 0.80 | A | 1.05 | A | 60 | A |
| Example 8 | 120 | 150 | 0.80 | 1.3 | 22 | 0.80 | A | 1.05 | A | 60 | A |
| Example 9 | 193 | 280 | 0.69 | 1.4 | 20 | 0.75 | A | 1.15 | A | 59 | A |
| Example 10 | 95 | 150 | 0.63 | 1.3 | 22 | 0.75 | A | 1.10 | A | 61 | A |
| Example 11 | 95 | 145 | 0.66 | 1.3 | 26 | 0.75 | A | 1.00 | A | 60 | A |
| Example 12 | 95 | 151 | 0.63 | 1.3 | 23 | 0.75 | A | 1.15 | A | 62 | A |
| Example 13 | 60 | 150 | 0.40 | 1.3 | 38 | 0.75 | A | 1.15 | A | 58 | A |

| | Aperture diameter X (μm) | Maximum diameter Y (μm) | X/Y | Y/t | communicating hole number (holes) | Pressure loss | | A axis compresive strength | | Purification performance | |
|---|---|---|---|---|---|---|---|---|---|---|---|
| | | | | | | Pressure loss ratio | Evaluation | A axis compressive strength (MPa) | Evaluation | NOx purification rate (%) | Evaluation |
| Example 14 | 105 | 130 | 0.81 | 1.1 | 20 | 0.75 | A | 1.15 | A | 62 | A |
| Comp. Ex. 1 | - | 4 | - | 0.03 | 0 | 1.20 | C | 6.95 | A | 60 | A |
| Comp. Ex. 2 | - | 13 | - | 0.11 | 0 | 1.00 | C | 1.00 | A | 59 | A |
| Comp. Ex. 3 | 100 | 80 | 1.25 | 0.7 | 20 | 1.00 | C | 1.00 | A | 61 | A |
| Example 15 | 140 | 150 | 0.93 | 1.3 | 21 | 0.93 | B | 1.05 | A | 60 | A |
| Example 16 | 95 | 300 | 0.32 | 2.6 | 20 | 0.91 | B | 1.10 | A | 60 | A |
| Example 17 | 97 | 150 | 0.65 | 1.3 | 20 | 0.75 | A | 0.70 | B | 61 | A |

The honeycomb catalyst body manufactured above was evaluated for "pressure loss", "A axis compressive strength", and "purification performance". The evaluation methods of the evaluations are described below.

[Pressure loss]

Air was circulated in the sample (honeycomb catalyst body) at a flow rate of 0.5 m$^3$/min. at room temperature to measure the differential pressure between the front and the back of the sample. Thus, the pressure loss was calculated. In Table 2, "pressure loss ratio" means the ratio of pressure loss of each of the honeycomb catalyst bodies of Examples 1 to 17 and Comparative Examples 1 and 3 with respect to the pressure loss of the honeycomb catalyst body of Comparative Example 2. As the evaluations of the pressure loss, "A" was given when the pressure loss ratio was 0.80 or less, "B" was given when the pressure loss ratio was above 0.80 and below 1.00, and "C" was given when the pressure loss ratio was 1.00 or more. The evaluations were thus given.

[A axis compressive strength]

The A axis compressive strength means the compressive strength (MPa) provided in JASO standard M505-87 as the automobile standards issued by the Society of Automotive Engineers of Japan, Inc. Specifically, it is fracture strength at the time that a compressive load is applied on the honeycomb structure (honeycomb catalyst body) in the central axis direction. The pressure at the time that the honeycomb structure breaks is defined as the "A axis compressive strength". The measurement for the A axis compressive strength was performed in the present Example, and the evaluation was given. As the evaluations, "A" was given when the A axis compressive strength is 1.00 MPa or more, "B" was given when the A axis compressive strength is 0.50 MPa or more and below 1.00 MPa, and "C" was given when the A axis compressive strength is below 0.50 MPa.

[Purification performance]

In the first place, the honeycomb catalyst body of the present Embodiment was used as a test piece for a three way catalyst, and $NO_x$-containing gas was sent into the test piece for a three way catalyst. Next, the $NO_x$ amount discharged from the honeycomb catalyst body (test piece for a three way catalyst) was analyzed by a gas analyzer.

Here, the temperature of the gas sent into the test piece for a three way catalyst was controlled to 200°C. Incidentally, temperature of the test piece for a three way catalyst and temperature of the gas could be adjusted by a heater. As the heater, an infrared imaging furnace was used. As the gas for the test, specifically, there was used gas where 5 vol% of carbon dioxide, 14 vol% of oxygen, 350 ppm (based on volume) of nitrogen dioxide, and 10 vol% of water were mixed with nitrogen. The gas for the test was obtained by mixing water with mixed gas obtained by mixing the remaining gases, which had been prepared separately, in a pipe when the test was performed. As the gas analyzer, "MEXA9100EGR" produced by Horiba was used. In addition, the space velocity of the gas upon flowing into the test piece for a three way catalyst was 50000 (hour$^{-1}$).

The "$NO_x$ purification rate" in Table 2 was obtained by dividing the value obtained by deducting the "$NO_x$ amount of exhaust gas from the test piece for a three way catalyst" from the $NO_x$ amount of the gas for the test by the $NO_x$ amount and multiplying the value by 100. Here, "A" was given when the $NO_x$ purification rate was 50% or more, "B" was given when the $NO_x$ purification rate was above 30% and below 50%, and "C" was given when the $NO_x$ purification rate was 30% or below. Thus, the purification performance was evaluated.

In the honeycomb catalyst body of the present Example, the pressure loss ratio was 0.93, and the evaluation of the pressure loss was "B". The A axis compressive strength was 1.10, and the evaluation was "A". The $NO_x$ purification rate was 61%, and the evaluation of purification performance was "A". Each of the measurement results and each of the evaluation results ("pressure loss", "A axis compressive strength", and "purification performance") are shown in Table 2.

(Examples 2 to 17, Comparative Examples 1 to 3)

There were manufactured honeycomb structures each satisfying the diameter, the length in the central axis direction, the partition wall thickness, the porosity of the partition walls, and the cell density shown in Table 1 and the aperture diameter X, the maximum diameter Y, the ratio of (aperture diameter X / maximum diameter Y), the ratio of (maximum diameter Y / thickness t), and the total number of communicating holes shown in Table 2. The honeycomb catalyst bodies each satisfying the catalyst-loading amount and the noble metal amount shown in Table 1 were manufactured. The honeycomb catalyst bodies were evaluated for "pressure loss", "A axis compressive strength", and "purification performance" in the same manner as in Example 1. The results are shown in Table 2.

(Example 18)

In the first place, a honeycomb structure was manufactured in the same manner as in Example 1. Incidentally, the honeycomb structure had a diameter of 25 mm, a length of 50 mm in the central axis direction, and a partition wall thickness of 114.3 $\mu$m. The partition walls had a porosity of 50%. The cell density was 62 cells/cm$^2$.

Next, 1 kg of water was added to 200g of zeolite having an average particle diameter of 5 $\mu$m, and wet pulverization was performed with a ball mill to obtain pulverized particles. To the pulverized particles was added 20g of alumina sol as a binder. Thus, $NO_x$ reduction catalyst slurry was obtained. A honeycomb structure was immersed in the $NO_x$ reduction catalyst slurry. Then, the honeycomb structure was dried at 120°C for 20 minutes and the n fired at 600°C for one hour. Thus, the honeycomb catalyst body was obtained.

The honeycomb catalyst body obtained above had a zeolite-loading amount of 260 g/L. The honeycomb catalyst body had an aperture diameter X of 277 $\mu$m. The maximum diameter Y of the communicating holes was 300 $\mu$m. The ratio of (aperture diameter X / maximum diameter Y) ("X/Y" in Table 3) was 0.92. The ratio of (maximum diameter Y / thickness t) ("Y/t" in Table 3) was 2.6. The total number of the communicating holes ("communicating hole number" in Table 3 was 15. The results are shown in Table 3.

The honeycomb catalyst body was evaluated for "pressure loss", "A axis compressive strength", and "purification performance" in the same manner as in Example 1. In this Example, evaluation of the "purification performance" was conducted according to the following method in addition to the aforementioned method regarding "purification performance". The results are shown in Table 3.

[Purification performance]

In the first place, the honeycomb catalyst body of the present Example was used as a test piece for a $NO_x$ reduction catalyst. Gas containing $NO_x$ was sent into the test piece for a $NO_x$ reduction catalyst. Next, the $NO_x$ amount discharged from the honeycomb catalyst body (test piece for a $NO_x$ reduction catalyst) was analyzed by a gas analyzer.

Here, the temperature of the gas sent into the test piece for a $NO_x$ reduction catalyst was controlled to 200°C. Incidentally, temperature of the test piece for a $NO_x$ reduction catalyst and temperature of the gas could be adjusted by a heater. As the heater, an infrared imaging furnace was used. As the gas for the test, specifically, there was used gas where 5 vol% of carbon dioxide, 14 vol% of oxygen, 350 ppm (based on volume) of nitrogen dioxide, 350 ppm (based on volume) of ammonia, and 10 vol% of water were mixed with nitrogen. The gas for the test was obtained by mixing water and mixed gas obtained by mixing the remaining gases, which had been prepared separately, in a pipe when the test was performed. As the gas analyzer, "MEXA9100EGR" produced by Horiba was used. In addition, the space velocity of the gas upon flowing into the test piece for a $NO_x$ reduction catalyst was 50000 (hour$^{-1}$).

The "$NO_x$ purification rate" in Table 3 was obtained by dividing the value obtained by deducting the "$NO_x$ amount of exhaust gas from the test piece for a $NO_x$ reduction catalyst" from the $NO_x$ amount of the gas for the test by the $NO_x$ amount and multiplying the value by 100. Here, "A" was given when the $NO_x$ purification rate was 50% or more, "B" was given when the $NO_x$ purification rate was above 30% and below 50%, and "C" was given when the $NO_x$ purification rate was 30% or below. Thus, the purification performance was evaluated.

In the honeycomb catalyst body of the present Example, the pressure loss ratio was 0.93, and the evaluation of the pressure loss was "B". The A axis compressive strength was 1.10, and the evaluation was "A". The $NO_x$ purification rate was 75%, and the evaluation of purification performance was "A". Each of the measurement results and each of the evaluation results ("pressure loss", "A axis compressive strength", and "purification performance") are shown in Table 3.

[Table 3]

| | Aperture diameter X (μm) | Maximum diameter Y (μm) | X/Y | Y/t | Communicating hole number (holes) | Pressure loss | | A axis compressive strength | | Purification performance | |
|---|---|---|---|---|---|---|---|---|---|---|---|
| | | | | | | Pressure loss ratio | Evaluation | A axis compressive strength (MPa) | Evaluation | NOx purification (%) | Evaluation |
| Example 18 | 277 | 300 | 0.92 | 2.6 | 15 | 0.93 | B | 1.10 | A | 75 | A |
| Example 19 | 62 | 130 | 0.48 | 1.1 | 42 | 0.85 | A | 0.61 | B | 76 | A |
| Example 20 | 97 | 150 | 0.65 | 1.3 | 10 | 0.95 | B | 5.00 | A | 75 | A |
| Example 21 | 97 | 150 | 0.65 | 1.3 | 38 | 0.75 | A | 0.50 | B | 74 | A |
| Example 22 | 97 | 150 | 0.65 | 1.3 | 20 | 0.80 | A | 1.10 | A | 77 | A |
| Example 23 | 50 | 150 | 0.33 | 1.3 | 10 | 0.80 | A | 1.05 | A | 76 | A |
| Example 24 | 66 | 150 | 0.44 | 1.3 | 36 | 0.80 | A | 1.05 | A | 76 | A |
| Example 25 | 120 | 150 | 0.80 | 1.3 | 22 | 0.80 | A | 1.05 | A | 74 | A |
| Example 26 | 193 | 280 | 0.69 | 1.4 | 20 | 0.75 | A | 1.15 | A | 78 | A |
| Example 27 | 95 | 150 | 0.63 | 1.3 | 22 | 0.75 | A | 1.10 | A | 76 | A |
| Example 28 | 95 | 145 | 0.66 | 1.3 | 26 | 0.75 | A | 1.00 | A | 76 | A |
| Example 29 | 95 | 151 | 0.63 | 1.3 | 23 | 0.75 | A | 1.15 | A | 77 | A |
| Example 30 | 60 | 150 | 0.40 | 1.3 | 38 | 0.75 | A | 1.15 | A | 75 | A |

(continued)

| | Aperture diameter X (μm) | Maximum diameter Y (μm) | X/Y | Y/t | Communicating hole number (holes) | Pressure loss | | A axis compressive strength | | Purification performance | |
|---|---|---|---|---|---|---|---|---|---|---|---|
| | | | | | | Pressure loss ratio | Evaluation | A axis compressive strength (MPa) | Evaluation | NOx purification (%) | Evaluation |
| Example 31 | 105 | 130 | 0.81 | 1.1 | 20 | 0.75 | A | 1.15 | A | 76 | A |
| Comp. Ex. 4 | - | 4 | - | 0.03 | 0 | 1.20 | C | 6.95 | A | 74 | A |
| Comp. Ex. 5 | - | 13 | - | 0.11 | 0 | 1.00 | C | 1.00 | A | 75 | A |
| Comp. Ex. 6 | 100 | 80 | 1.25 | 0.7 | 20 | 1.00 | C | 1.00 | A | 76 | A |
| Example 32 | 140 | 150 | 0.93 | 1.3 | 21 | 0.93 | B | 1.05 | A | 76 | A |
| Example 33 | 95 | 300 | 0.32 | 2.6 | 20 | 0.91 | B | 1.10 | A | 75 | A |
| Example 34 | 97 | 150 | 0.65 | 1.3 | 20 | 0.75 | A | 0.70 | B | 74 | A |

EP 2 505 252 B1

(Examples 19 to 34, Comparative Example 4 to 6)

There were used honeycomb structures which were the same as the honeycomb structures manufactured in Examples 2 to 17 and Comparative Examples 1 to 3. Each of the honeycomb structures was immersed in the $NO_x$ reduction catalyst slurry manufactured in the same manner as in Example 18. Then, the honeycomb structures were dried at 120°C for 20 minutes and then fired at 600°C for one hour. Thus, each of the honeycomb catalyst bodies of Examples 19 to 34 and Comparative Examples 4 to 6 was obtained. Each honeycomb catalyst body had a zeolite-loading amount of 260 g/L. Each honeycomb catalyst body was evaluated for "pressure loss", "A axis compressive strength", and "purification performance" in the same manner as in Example 18. The results are shown in Table 3.

As clear from Tables 2 and 3, the honeycomb catalyst bodies of Examples 1 to 34 had a low pressure loss in comparison with the honeycomb catalyst bodies of Comparative Examples 1 to 6, and it was confirmed that the honeycomb catalyst bodies of Examples 1 to 34 can carry a larger number of catalyst than a conventional honeycomb catalyst body. That is, it was confirmed that honeycomb catalyst bodies of Examples 1 to 34 could carry a large amount of catalyst in comparison with the honeycomb catalyst bodies of Comparative Examples 1 to 6 when the pressure loss ratio was made the same.

In Examples 2, 4 to 14, and 17, the "communicating holes satisfy the formula: 0 < (aperture diameter X / maximum diameter Y) < ($\sqrt{3}$) /2" and "the thickness t and the maximum diameter Y satisfy the formula: 1 < (maximum diameter Y / thickness t) < 2. Therefore, they had good evaluations of "pressure loss" in comparison with Examples 1, 15, and 16.

In Examples 9 to 14 among Examples 2 and 9 to 14, which have the same porosity (65%), the "total number of the communicating holes" was within the range "from 1 to 40". On the other hand, in Example 2, the "total number of the communicating holes" was out of the range "from 1 to 40". Therefore, Examples 9 to 14 had good evaluations of "A axis compressive strength" in comparison with Example 2.

In Examples 1 and 5 to 16, the "porosity" was within the range "from 40 to 70%". Examples 5 to 14 among Examples 1 and 5 to 16 satisfy the formula: 0 < (aperture diameter X / maximum diameter Y) < ($\sqrt{3}$) /2 and the formula: 1 < (maximum diameter Y / thickness t) < 2. Therefore, Examples 5 to 14 had good evaluations of both "pressure loss" and "A axis compressive strength" in comparison with Examples 1, 15, and 16, and the balance between the pressure loss ratio and the A axis compressive strength was good.

A honeycomb structure and a honeycomb catalyst body of the present invention can suitably be used for purifying exhaust gas discharged from an engine.

**Claims**

1. A honeycomb structure comprising porous partition walls separating and forming a plurality of cells functioning as fluid passages,
   wherein the partition walls have a plurality of communicating holes (10) for communicating adjacent cells with one another, **characterized in that**
   an aperture diameter (X) of each of the communicating holes in a cross section perpendicular to the cell extension direction is smaller than the length of the longest straight line (12) among the straight lines parallel to the surfaces of the partition walls and drawn in the communicating hole in the cross section, and
   a distance between side walls (21) forming the communicating hole becomes shorter from the longest straight line (12) toward the aperture (14) with the longest straight line (12) as a border line in the communicating hole in the cross section.

2. The honeycomb structure according to Claim 1, wherein the total number of the communicating holes in a cross section perpendicular to the cell extension direction is 1 to 40.

3. The honeycomb structure according to Claim 1 or 2, wherein the communicating holes satisfy the formula: 0 < (the aperture diameter / length of the longest straight line) and
   the thickness t of the partition walls and the length of the longest straight line in a cross section perpendicular to the cell extension direction satisfy the formula: 1 < (length of the longest straight line / thickness t) < 2.

4. The honeycomb structure according to any one of Claims 1 to 3, wherein the partition walls have a porosity of 40 to 70%.

5. A honeycomb catalyst body provided with a honeycomb structure according to any one of Claims 1 to 4 and a catalyst loaded on inner surfaces of the pores of the partition walls, surfaces of the partition walls, and inner surfaces of the communicating holes of the partition walls.

6. The honeycomb catalyst body according to Claim 5, wherein the catalyst contains at least one kind selected from the group consisting of platinum, rhodium, palladium, metal-substituted zeolite, vanadium, titania, tungsten oxide, silver, alumina, ceria, and zirconia.


**Patentansprüche**

1. Wabenstruktur, umfassend poröse Trennwände, die eine Vielzahl an Zellen, die als Fluiddurchlässe fungieren, voneinander trennen und ausbilden,
wobei die Trennwände eine Vielzahl an Verbindungslöchern (10) aufweisen, die benachbarte Zellen miteinander verbinden, **dadurch gekennzeichnet, dass**
der Öffnungsdurchmesser (X) jedes der Verbindungslöcher in einem Querschnitt senkrecht auf die Zellerstreckungsrichtung kleiner ist als die Länge der längsten geraden Linie (12) von geraden Linien, die zu den Oberflächen der Trennwände parallel sind und im Querschnitt in dem Verbindungsloch verlaufen, und dass
der Abstand zwischen Seitenwänden (21), die das Verbindungsloch ausbilden, von der längsten geraden Linie (12) hin zur Öffnung (14) mit der längsten geraden Linie (12) als Grenzlinie im Verbindungsloch im Querschnitt kleiner wird.

2. Wabenstruktur nach Anspruch 1, wobei die Gesamtzahl der Verbindungslöcher in einem Querschnitt senkrecht auf die Zellerstreckungsrichtung 1 zu 40 ist.

3. Wabenstruktur nach Anspruch 1 oder 2, wobei die Verbindungslöcher folgender Formel entsprechen:

$$0 < (\text{Öffnungsdurchmesser} / \text{Länge der längsten geraden Linie}) < (\sqrt{3}) / 2$$

und
wobei die Dicke t der Trennwände und die Länge der längsten geraden Linie in einem Querschnitt senkrecht auf die Zellerstreckungsrichtung folgender Formel entspricht: $1 < (\text{Länge der längsten geraden Linie} / \text{Dicke } t) < 2$.

4. Wabenstruktur nach einem der Ansprüche 1 bis 3, wobei die Trennwände eine Porosität von 40 bis 70 % aufweisen.

5. Wabenkatalysatorkörper, der mit einer Wabenstruktur nach einem der Ansprüche 1 bis 4 bereitgestellt ist, und ein Katalysator, der auf Innenwände der Poren der Trennwände, Oberflächen der Trennwände und Innenflächen der Verbindungslöcher der Trennwände geladen ist.

6. Wabenkatalysatorkörper nach Anspruch 5, wobei der Katalysator zumindest eines ausgewählt aus der Gruppe bestehend aus Platin, Rhodium, Palladium, Metallsubstituiertem Zeolith, Vanadium, Titan, Wolframoxid, Silber, Aluminiumoxid, Zeroxid und Zirkonium umfasst.


**Revendications**

1. Structure en nid d'abeilles comprenant des parois de séparation poreuses séparant et formant une pluralité de cellules fonctionnant en tant que passages de fluide,
dans laquelle les parois de séparation comportent une pluralité de trous de communication (10) pour mettre en communication des cellules contiguës les unes avec les autres, **caractérisée en ce que**
un diamètre d'ouverture (X) de chacun des trous de communication en coupe transversale perpendiculaire à la direction d'extension de cellule est inférieur à la longueur de la droite la plus longue (12) parmi les droites parallèles aux surfaces des parois de séparation et dessinée dans le trou de communication en coupe transversale, et une distance entre les parois latérales (21) formant le trou de communication devient plus courte de la droite la plus longue (12) vers l'ouverture (14) avec la droite la plus longue (12) en tant que ligne de bordure dans le trou de communication en coupe transversale.

2. Structure en nid d'abeilles selon la revendication 1, dans laquelle le nombre total des trous de communication en coupe transversale perpendiculaire à la direction d'extension de cellule est de 1 à 40.

3. Structure en nid d'abeilles selon la revendication 1 ou 2, dans laquelle les trous de communication satisfont à la formule : 0 < (diamètre d'ouverture/longueur de la droite la plus longue) < $(\sqrt{3})/2$, et l'épaisseur t des parois de séparation et la longueur de la droite la plus longue en coupe transversale perpendiculaire à la direction d'extension de cellule satisfont à la formule : 1 < (longueur de la droite la plus longue/épaisseur t) < 2.

4. Structure en nid d'abeilles selon l'une quelconque des revendications 1 à 3, dans laquelle les parois de séparation ont une porosité de 40 à 70 %.

5. Corps de catalyseur de nid d'abeilles pourvu d'une structure en nid d'abeilles selon l'une quelconque des revendications 1 à 4 et d'un catalyseur chargé sur les surfaces intérieures des pores des parois de séparation, les surfaces des parois de séparation et les surfaces intérieures des trous de communication des parois de séparation.

6. Corps de catalyseur de nid d'abeilles selon la revendication 5, dans lequel le catalyseur contient au moins un type sélectionné dans le groupe consistant en le platine, le rhodium, le palladium, une zéolite à substitution métallique, le vanadium, le dioxyde de titane, l'oxyde de tungstène, l'argent, l'alumine, l'oxyde de cérium et la zircone.

**FIG.1**

**FIG.2**

EP 2 505 252 B1

FIG.3

FIG.4

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003033664 A
- JP 2001269585 A
- EP 1408207 A1
- US 4404007 A